# EUROPEAN PATENT APPLICATION

(11) **EP 4 386 451 A1**
(43) Date of publication of application: **19.06.2024**
(21) Application number: 23154607.8
(22) Date of filing: 02.02.2023
(51) Int. Cl.: G01S 19/42, G01S 19/39, G01S 19/09, G01S 19/21, G01S 19/22

(54) **METHOD TO DETERMINE A POSITION OF AN OBJECT BASED ON A GNSS RAW DATA SET**

(30) Priority: 12.12.2022 IN 202211071672
(71) Applicant: CM1 GmbH, 91207 Lauf an der Pegnitz (DE)
(72) Inventor: Sawhney, Prateek, Panipat (IN)
(74) Representative: PATERIS Patentanwälte PartmbB

(57) **Abstract**

A method to determine a position of an object (10) based on a GNSS raw data set (RDS), comprising at least the steps of:
(S600) feeding the GNSS raw data set (RDS) to a first trained artificial neural network (4) in order to get as output of the first artificial neural network (4) a first data set (FDS) of low quality data and a second data set (SDS) of high quality data,
(S700) feeding the first data set (FDS) of low quality data to a second trained artificial neural network (6) in order to get as output of the second artificial neural network (6) an improved data set (IDS),
(S800) combining the second data set (SDS) of high quality data and the improved data set (IDS) in order to provide a corrected data set (CDS) indicative for the position of the object (10).

## Description

### Field of the invention

The invention relates to a method to determine a position of an object based on a GNSS raw data set.

### Background of the invention

A satellite navigation system is a system that uses satellites to determine a position of an object. It allows satellite navigation devices to determine their location (longitude, latitude, and altitude/elevation) to high precision, usually within a few centimeters to meters, using time signals transmitted along a line of sight by radio from satellites.

A global navigation satellite system (GNSS) is a satellite navigation system providing global coverage. Examples of such systems are US Global Positioning System (GPS), Russia's Global Navigation Satellite System (GLONASS), China's BeiDou Navigation Satellite System, and the European Union's Galileo.

Global coverage is generally achieved by a satellite constellation of 18-30 medium Earth orbit (MEO) satellites spread between several orbital planes. The actual systems vary, but all use orbital inclinations of >50° and orbital periods of roughly twelve hours (at an altitude of about 20.000 km).

The satellite broadcasts a signal that contains orbital data (from which the position of the satellite can be calculated) and the precise time the signal was transmitted. Orbital data include a rough almanac for all satellites to aid in finding them, and a precise ephemeris for this satellite. The orbital ephemeris is transmitted in a data message that is superimposed on a code that serves as a timing reference. The satellite uses an atomic clock to maintain synchronization of all the satellites in the constellation. The GNSS-receiver compares the time of broadcast encoded in the transmission of three (at sea level) or four (which also allows an altitude calculation) different satellites, measuring the time-of-flight to each satellite. Several such measurements can be made at the same time to different satellites, allowing a continual fix to be generated in real time using an adapted version of trilateration.

Each distance measurement places the GNSS-receiver on a spherical shell at the measured distance from the broadcaster. By taking several such measurements and then looking for a point where they meet, a fix is generated. However, in the case of fast-moving GNSS-receivers, the position of the signal moves as signals are received from several satellites. In addition, the radio signals slow slightly as they pass through the ionosphere, and this slowing varies with the angle of the receiver to the satellite, because this changes the distance through the ionosphere. The basic computation thus attempts to find the shortest directed line tangent to four oblate spherical shells centered on four satellites.

GNSS-receivers reduce errors by using combinations of signals from multiple satellites, and then using techniques such as Kalman filtering to combine the noisy, partial, and constantly changing data into a single estimate for position, time, and velocity.

A Differential Global Positioning System (DGPS) is an enhancement to a global navigation satellite system (GNSS) which provides improved location accuracy, in the range of operations of each system, from the 15-meter nominal GPS accuracy to about 1 - 3 centimeters in case of the best implementations.

Each DGPS uses a network of fixed ground-based reference stations to broadcast the difference between the positions indicated by the GPS satellite system and known fixed positions. These stations broadcast the difference between the measured satellite pseudo ranges and actual (internally computed) pseudo ranges, and receiver stations may correct their pseudo ranges by the same amount. The digital correction signal is typically broadcast locally over ground-based transmitters of shorter range. However, in some cases a GNSS-receiver can not receive such signals broadcast by fixed ground-based reference stations.

Therefore, it is an object of the invention to provide an enhancement to a global navigation satellite system (GNSS) without such fixed ground-based reference stations.

### Summary

According to one aspect, a method is provided to determine a position of an object based on a GNSS raw data set, comprising at least the steps of:
feeding the GNSS raw data set to a first trained artificial neural network in order to get as output of the first artificial neural network a first data set of low quality data and a second data set of high quality data,
feeding the first data set of low quality data to a second trained artificial neural network in order to get as output of the second artificial neural network an improved data set,
combining the second data set of high quality data and the improved data set in order to provide a corrected data set indicative for the position of the object.

A GNSS-receiver placed at the location of the object provides the GNSS raw data. Then, two trained artificial neural networks are used. The first artificial neural network can be considered as a gateway, selecting low quality data, which are outputted as the first data set of low quality data and then inputted in the second trained artificial neural network. High quality data, instead, pass the second artificial neural network, which means that the second data set of high quality data, remains untreated.

The second trained artificial neural network improves only the first data set of low quality data and provides the improved data set, which is combined with the second data set of high quality data set to provide the corrected data set indicative for the position of the GNSS-receiver and therefore of the object.

The combination of the two artificial neural network reduce the amount of training data needed, and the time needed for the training of the second artificial neural network since the second artificial neural network focusses only on data of low quality.

Thus, the usage of two artificial neural networks according to the above mentioned method provides an enhancement to a global navigation satellite system (GNSS) without such fixed ground-based reference stations.

Further, the training of the first artificial neural network may comprises the following steps:
recording training data with the GNSS-receiver in order to get recorded good training data,
recording training data with the GNSS-receiver in order to get recorded bad training data,
training of the first artificial neural network with the recorded good training data and with the recorded bad training data in order to train the first artificial neural network to get as output of the first artificial neural network the first data set of low quality data and the second data set of high quality data.

The good training data and the bad training data are recorded under good conditions and bad condition, respectively. Under good conditions a GNSS-receiver, which is used to record the training data, receives signals interference-free. On the other hand, under bad conditions a GNSS-receiver receives signals, which are intermittent. The recording of good training data and the bad training data could take place at different locations. For example, good training data could be recorded on an open field without buildings, whereas the bad training data could be recorded close to interference-causing buildings.

Further, the recorded training data are assigned to the good training data and bad training data by the use of Cosine similarity. The use of such Cosine similarity allows an automatic assignment to the good training data and the bad training data. Here, the recorded training data could be recorded in one step. That means that the GNSS-receiver will be moved to different places with different degrees of interference. Otherwise, the recorded training data could be recorded in two steps. That means that the GNSS-receiver will be at a first place, which is interference-free, and will then be at a second place, which is not is interference-free. This allows to increase the amount of data used to train the first artificial neural network.

Further, the training of the second artificial neural network may comprises the following steps:
recording training data with the GNSS-receiver in order to get recorded training data,
training of the second artificial neural network with the recorded training data in order to train the second artificial neural network to get as output of the second artificial neural network the improved data set.

The use of such a trained second artificial neural network in combination with the trained first artificial neuronal network allows benefiting from learning ability, parallelism, fault tolerance, and robustness to perturbations of artificial neural networks.

Further aspects relate to a computer program product, configured to carry out such a method, a system to determine a position of an object based on a GNSS raw data set, and a construction site with such a system.

### Brief description of the drawings

- Figure 1: shows a scenario, in which a position of an object of a construction site has to be determined with improved accuracy.
- Figure 2: schematically shows components of a system to determine a position of an object based on a GNSS raw data set,
- Figure 3: schematically shows a first artificial neural network of the system shown in figure 2.
- Figure 4: schematically shows a second artificial neural network of the system shown in figure 2.
- Figure 5: schematically shows the training of the first artificial neural network of the system shown in figure 2.
- Figure 6: schematically shows the training of the second artificial neural network of the system shown in figure 2.
- Figure 7: schematically shows a flow chart of a method to determine the position of the object shown in figure 1.

### Detailed description of the invention

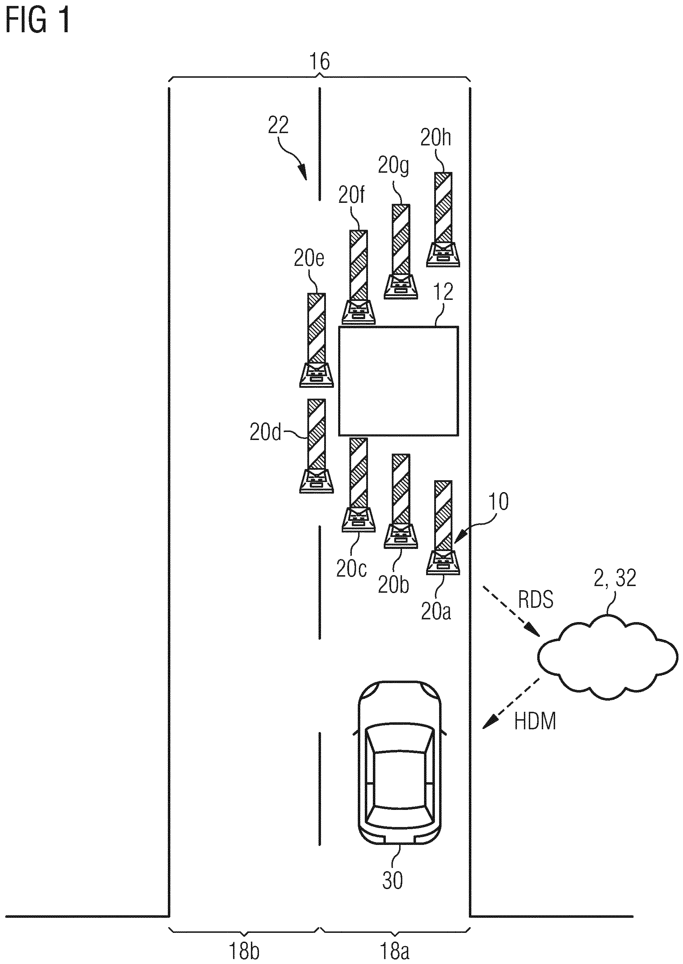

Reference is first made to Figure 1.

A road 16 with two lanes 18a, 18b is shown, with an established construction site 12 leading to the closure of lane 18a of the two lanes 18a, 18b.

At the construction site 12 road structure and/or other infrastructure elements are constructed, modified, maintained or demolished.

In the present scenario, the road 16 begins or ends at a cross street.

In order to safeguard the construction site 12, e.g., to protect persons working on the construction site 12, a safeguard 22 has been formed in the present embodiment example, which consists of eight safety devices 20a, 20b, 20c, 20d, 20e, 20f, 20g, 20h, which are arranged around the construction site 12 in such a way that the traffic is guided around the construction site 12 with a sufficient safety distance. Thus, a vehicle 30, in the present embodiment a self-driving car that is capable of sensing its environment and moving safely with little or no human input, has to change from lane 18a to lane 18b and revers in order to pass the construction site 12.

In the present embodiment, the safety devices 20a, 20b, 20c, 20d, 20e, 20f, 20g, 20h are each designed as a construction site beacon (or delineator) for guiding the vehicle 30 in order to pass the construction site 12.

However, the safety devices 20a, 20b, 20c, 20d, 20e, 20f, 20g, 20h each have to be at a defined position.

Before the safety devices 20a, 20b, 20c, 20d, 20e, 20f, 20g, 20h are placed at their positions a traffic ordinance (VRA) for the construction site 12 has to be submitted to a competent authority for approval.

In the traffic ordinance (VRA) road markings like the position of each of the safety devices 20a, 20b, 20c, 20d, 20e, 20f, 20g, 20h are described and specified in detail to form the safeguard 22.

After implementing the safeguard 22 by placing the safety devices 20a, 20b, 20c, 20d, 20e, 20f, 20g, 20h at their defined positions the safeguard 22 must be checked at predefined intervals, usually several times a day, which is very labourintensive.

In order to check the safeguard 22 by machine, an automated determination of the position of each safety devices 20a, 20b, 20c, 20d, 20e, 20f, 20g, 20h is needed. Each safety device 20a, 20b, 20c, 20d, 20e, 20f, 20g, 20h is equipped with a GNSS-receiver 14 providing a GNSS raw data set RDS indicative for the position of the GNSS-receiver 14 and therefore of the position of the assigned safety device 20a, 20b, 20c, 20d, 20e, 20f, 20g, 20h. Thus, the combination of a safety device 20a, 20b, 20c, 20d, 20e, 20f, 20g, 20h equipped with a GNSS-receiver 14, for example safety device 20a with the GNSS-receiver 14, can be considered as object 10, which position has to be determined by use of a GNSS for the daily check of the safeguard 22.

However, a GNSS like GPS provides a 15-meter nominal accuracy, which is not sufficient for the daily check of the safeguard 22 by machine.

In order to improve the accuracy, a system 2 is provided to determine the position of the object 10 based on the GNSS raw data set RDS provided by the GNSS-receiver 14. In the present embodiment, the system 2 is hosted by cloud-computing 32.

In the present embodiment, the GNSS raw data set RDS is transferred wirelessly to the cloud computing 32 hosting the system 2 which provides a corrected data set CDS indicative for the position of the object 10.

Moreover, in the present embodiment, the system 2 provides a HD map HDM based on the corrected data set CDS indicative for the position of the object 10.

The HD map HDM is a highly accurate map used in autonomous driving and contains details not normally present on traditional maps. In the present embodiment the HD map HDM is precise at a centimetre level.

The HD map HDM in the present embodiment includes map elements such as road shape, road marking, traffic signs, and barriers, like the safeguard 22.

In the present embodiment, the HD map HDM is transferred wirelessly to the vehicle 30 allowing the self-driving car in the present embodiment to change from lane 18a to lane 18b and revers in order to pass the construction site 12 based on the HD map HDM without any driver intervention. Alternatively, instead of the HD map HDM, the corrected data set CDS indicative for the position of the object 10 could be transferred wirelessly to the vehicle 30. Moreover, the HD map HDM could be transferred for documentation purposes, e.g., after implementing the safeguard 22 the safety devices 20a, 20b, 20c, 20d, 20e, 20f, 20g, 20h are at their defined positions. Further, the HD map HDM could be used to check the safeguard 22 by machine.

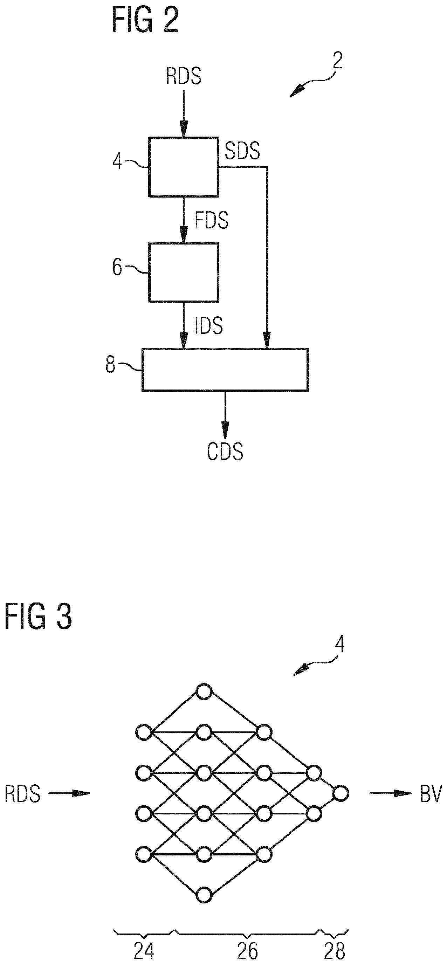

Reference is now made to Figure 2, which shows components of a system 2 to determine a position of the object 10 based on the GNSS raw data set RDS. In the present embodiment, the GNSS raw data set RDS comprises 166 input columns.

For the tasks and functions described below, the system 2 may comprise hardware-components and/or software-components. Further, in the present embodiment, the system 2 is hosted by cloud-computing 32.

The shown components are a first artificial neural network 4, a second artificial neural network 6, and an output unit 8.

The first artificial neural network 4 is configured to provide on the basis of the GNSS raw data set RDS as input a first data set FDS of low quality data or a second data set SDS of high quality data after its training, which will be described later in detail.

The second artificial neural network 6 is configured to provide on the basis of the first data set FDS of low quality data as input an improved data set IDS after its training, which will be described later in detail.

The output unit 8 is configured to combine the second data set SDS of high quality data and the improved data set IDS to provide a corrected data set CDS indicative of the position of the object 10.

The first artificial neural network 4 can be considered as a gateway, selecting low quality data, which are outputted as the first data set of low quality data and then inputted in the second trained artificial neural network 6. High quality data, instead, pass the second artificial neural network 6, which means that the second data set of high quality data, remains untreated.

The advantage of using a trained artificial neural network is that it benefits from its learning ability, its parallelism, its fault tolerance and its robustness against disturbances.

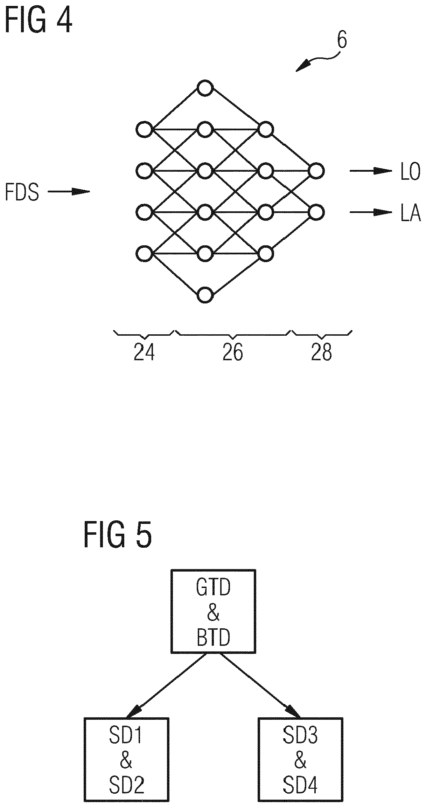

Reference is now made to Figures 3 and 4, which schematically show the architecture of the artificial neural networks 4, 6.

The artificial neural networks 4, 6 (ANN) are networks of artificial neurons. These neurons (also nodes) of the artificial neural network 4, 6 are arranged in layers, e.g., an input layer 24, one or more intermediate layer/s 26, and an output layer 28, to form a deep neuronal network. The input layer 24, the one or more intermediate layer/s 26, and an output layer 28 are connected in a fixed hierarchy. Moreover, in the present embodiment, the neurons are usually connected between two layers, but they can are also connected within a layer.

In the present embodiment, the first artificial neural network 4 comprises 22 layers. That means that the first artificial neural network 4 comprises 20 intermediate layers 24. Further, in the present embodiment, the first artificial neuronal network 4 comprises 18193746 trainable parameters.

Moreover, in the present embodiment, the first artificial neuronal network 4 (see Figure 3) comprises an output layer 28 with a single neuron since the first artificial neuronal network 4 provides as output a single Boolean variable BV, wherein 1 refers to high quality data, and 0 to low quality data. The Boolean variable BV could the assigned to the GNSS raw data set RDS, which was fed as input to the first artificial neural network 4 in order to indicate that they refer to data of high quality or low quality.

Despite the output layer 28 with a single neuron, the number of neurons of the input layer 24 and the one or more intermediate layer/s 26 may vary as well as the number of intermediate layers 26.

In the present embodiment, the second artificial neural network 6 comprises 14 layers. That means that the second artificial neural network 6 comprises 12 intermediate layers 26. Further, in the present embodiment, the second artificial neuronal network 6 comprises 5594477 trainable parameters.

Moreover, in the present embodiment, the second artificial neuronal network 6 comprises an output layer 28 with two neurons since the second artificial neuronal network 6 provides as output coordinates indicative for position of the object 10, e.g., two values, one for the latitude LA, and one for the longitude LO. These two values are the improved data set IDS. Moreover, the improved data set IDS comprises at least two integers, for example.

In the present embodiment, the second artificial neuronal network 6 comprises an output layer 28 with two neurons since the second artificial neuronal network 6 provides the improved data set IDS, which comprises only two values, one for the latitude LA, and one for the longitude LO.

However, the second artificial neuronal network 6 may comprise an output layer 28 with three neurons, which allows providing an improved data set IDS with three values, one for the latitude LA, and one for the longitude LO, and one for the altitude.

In the present embodiment, the first artificial neuronal network 4 as well as the second artificial neuronal network 6 are both feedforward networks in which a layer is always connected only to the next higher layer.

However, despite the present embodiment, one or both of the artificial neuronal networks 4, 6 may comprise connections between nodes in both directions. For example, one or both of the artificial neuronal networks 4, 6 may be a recurrent neural network (RNN). Alternatively, one or both of the artificial neuronal networks 4, 6 may be a convolutional neural network (CNN), for example. Furthermore, one or both of the artificial neuronal networks 4, 6 may comprise more than an artificial network with only a single architecture. For example, one or both of the artificial neuronal networks 4, 6 may comprise a convolutional neural network as an input neuronal network, followed by a feedforward network or a recurrent neural network.

Reference is now made to Figure 5 to explain the preparation of the training data and the training of the first artificial network 4.

The artificial neural network 4 is trained during a training phase before it is put into operation. During the training phase, the artificial neural network 4 is modified so that it generates corresponding output patterns for certain input patterns. This can be done by supervised learning, unsupervised learning, reinforcement learning or stochastic learning. In the present embodiment, supervised learning was used.

The GNSS-receiver 14 is used to record training data, e.g., recorded training data RTD for the training of the first artificial neural network 4.

In the present embodiment, the GNSS-receiver 14 is a ZED-F9P chip. The recorded training data in the present embodiment are in Ublox-format, which could be further analyzed in Ucenter.

In the present embodiment the good training data GTD and the bad training data BTD are recorded under good conditions and bad condition, respectively. Under good conditions the GNSS-receiver 14 is at a first place where the GNSS-receiver 14 receives signals interference-free. Under bad conditions the GNSS-receiver 14 is at a place where the GNSS-receiver 14 receives signals, which were intermittent. Thus, the recording of good training data GTD and the bad training data BTD could take place at different locations.

Good conditions can be at an open space. An open space can be a park or a parking space, i.e. under conditions without disturbance to the GNSS-receiver 14. Bad conditions are e.g. a balcony or a crowded street, which cause disturbance to the GNSS-receiver 14.

In the present embodiment, in a first step the recorded good training data GTD and the bad training data BTD are converted into CSV-format by considering only those columns which are populated evenly and not 0. The duration of the recorded good training data GTD and the bad training data BTD could be as long as possible, the more the data, the better is the accuracy of the time series-based machine learning model. In the present embodiment 15 minutes of recorded data were used.

In the present embodiment, in a further step a binary normalization or data transformation is carried out. The recorded good training data GTD and the bad training data BTD in CSV-format are normalized or cleaned by carrying out several tasks such as eliminating zero-columns or rows which do not constitute a complete signal. Another step which is applied over the recorded good training data GTD and the bad training data BTD in CSV-format is converting several columns into values between 0 -1, to convert all the data into a proper format.

In the present embodiment, in a further step, the good training data GTD and the bad training data BTD are then divided into 2 parts, e.g., training sets and test sets. That means that the good training data GTD is divided into a good training sub-dataset SD1 and a good test sub-dataset SD2. Further, the bad training data BTD is divided into a bad training sub-dataset SD3 and a bad test sub-dataset SD4.

In the present embodiment, in a further step the four above mentioned subdatasets SD1, SD2, SD3, SD4 are then converted into a new CSV file with a new column addition of "Result" containing the Boolean value of "Good" or "1" for the good training sub-dataset and the good test sub-dataset. Further, the addition of "Result" contains the Boolean value of "Bad" or "0" for the bad training sub-dataset and the bad test sub-dataset.

In the present embodiment, in a further step the four above mentioned subdatasets SD1, SD2, SD3, SD4 converted into a new CSV file with a new column addition of "Result" are converted into "X" and "Y". One point to note here is that the data files for both type of data i.e., "Good" and "Bad" contain all the satellite data columns along with the "latitude" and "longitude" column in the "X" part. The "Y" part only contains the column which needs to be predicted later by the first artificial neuronal network 4. Thus, the first artificial neuronal network 4 will after its training analyze the GNSS raw data set RDS and predict if the incoming satellite data has a "Result", e.g., "1" or "0".

In the present embodiment, the first artificial neural network 4 has 1072 columns and gives the output as a single value, i.e., a value between "0" and "1", "0.5" being set as the threshold. In the present embodiment a value between "0" and lower than "0.5" means "bad", whereas a value between "0.5" and "1" means "good".

However, in an alternative embodiment, a value between "0" and "0.5" could mean "bad", whereas a value between higher than "0.5" and "1" could mean "good".

In the present embodiment, the first artificial neural network 4 is a Keras Deep Neural Network. Further, in the present embodiment, as activation function "ReLu" or a sigmoid activation function was used. However, other activation functions can be used as well.

In the present embodiment backpropagation was used, which is an algorithm for training feedforward neural networks. Backpropagation computes a gradient in weight space of the feedforward neural network, with respect to a given loss function. However, despite the present embodiment, other algorithms could be used.

Further, the first artificial neural network 4 could comprise a long short-term memory (LSTM) in order to prevent back propagated errors from vanishing or exploding.

After training of the first artificial neural network 4 is done, the first trained artificial neural network 4 is saved in a h5-format in the present embodiment. Side by side, the accuracy of the first trained artificial neural network 4 could be tested by the test-datasets. The first trained artificial neural network 4 can further be convert into JSON-format in order to provide cloud computing 32 services like Amazon Web Services or Azure as an API (Application Programming Interfaces).

In an alternative embodiment the recorded training data are assigned to the good training data GTD and bad training data BTD by the use of Cosine similarity. This allows an assignment of the recorded training data in order to assign them to the good training data GTD and bad training data BTD by machine.

Cosine similarity is a measure of similarity between two sequences of numbers. For defining it, the sequences are viewed as vectors in an inner product space, and the Cosine similarity is defined as the cosine of the angle between them, that is, the dot product of the vectors divided by the product of their lengths.

Thus, a greater value of cosine is indicative for a greater similarity between two satellite signal properties and location coordinates. Similar signals are the candidates for recommendation. A developed document term matrix and TF-IDF (term frequency-inverse document frequency) is a numerical statistic that is often used as a weighting factor in searches of information retrieval, text mining, and user modelling. The TF-IDF value increases proportionally to the number of times a feature appears in a signal and is offset by the number of features in the corpus that contain the signal, which helps to adjust for the fact that some features appear more frequently in general.

Thus, the TF-IDF concept could be used to increase the weight of features that are most relevant and decrease the weight of signals that occur most repeatedly in the raw data set RDS involving the satellite properties and location coordinates i.e., latitude and longitude.

As a result, a recommendation for the input satellite signal consisting of satellite properties and location coordinates is given. Recommendation is in the form of Result containing a Boolean value, which is a measure between "0" and "1", threshold being set to "0.5". In the present embodiment, a value between "0" and lower than "0.5" could mean "bad", whereas a value between "0.5" and "1" could mean "good". However, in an alternative embodiment, a value between "0" and "0.5" could mean "bad", whereas a value between higher than "0.5" and "1" could mean "good". The output will be in the form of "Good" or "Bad".

A machine learning recommendation model which is deployed over Amazon Web Service (AWS), for example, can be invoked via some API client, like "Postman". The API client takes the input as JavaScript Object Notation (JSON) and returns the set of predictions. One must make a POST request in with some input data attached to the request. The input is in the form of comma separated satellite properties/values consisting of columns like "X", "Y", "Z", "Az", "El", ......, "latitude" and "longitude". This data is sent along with the POST request and the machine learning recommendation model processes the data given and returns a network response of 200 (OK). The idea of deploying this machine learning recommendation model onto some cloud computing 32 service provider leverages the fact that there would not be the need to keep this machine learning model locally on a system while integrating this system with the current web application or android application.

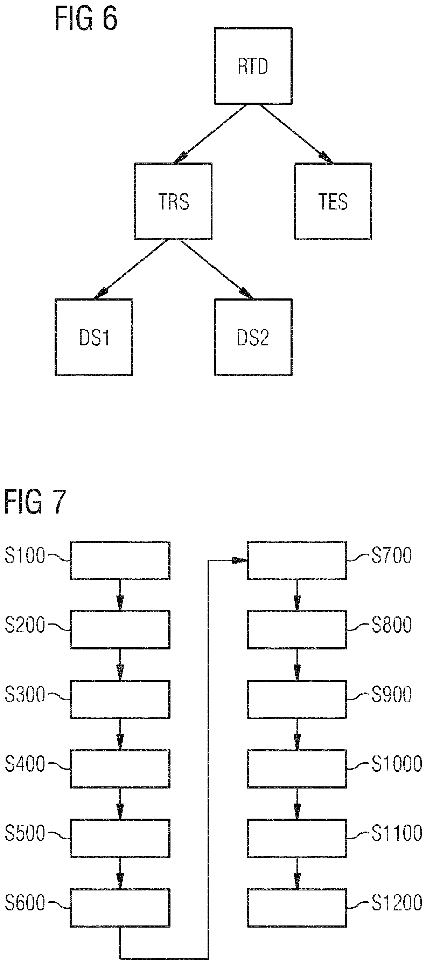

Reference is now made to Figure 6 to explain the preparation of the training data and the training of the second artificial neural network 6.

As the first artificial neural network 4, the second artificial neural network 6 is trained during a training phase before it is put into operation. In analogy, during the training phase, the second artificial neural network 6 is modified so that it generates corresponding output patterns for certain input patterns. This can also be done by supervised learning, unsupervised learning, reinforcement learning or stochastic learning. Again, in the present embodiment, supervised learning was used.

The training of the first artificial neural network 4 and the second artificial neural network 6 can be done sequentially, starting with one of the first artificial neural network 4 or second artificial neural network 6. Further, the training can also be done simultaneously.

Again, in the present embodiment, the GNSS-receiver 14 with a ZED-F9P chip is used to record training data, e.g., recorded training data RTD for the training of the second artificial neural network 6.

In the present embodiment, in a first step the recorded training data RTD is converted into CSV-format by considering only those columns which are populated evenly and not 0. The duration of the recorded training data could be as long as possible, the more data, the better the accuracy of the time series-based machine learning model. In the present embodiment 15 minutes of recorded training data were used.

In the present embodiment, in a further step, again a binary normalization or data transformation is carried out. Therefore, the recorded training data RTD in CSV-format are normalized or cleaned by carrying out several tasks such as eliminating zero-columns or rows which do not constitute a complete signal. Another step which is applied over the recorded training data RTD in CSV-format is converting several columns into values between 0 - 1, to convert all the data into a proper format.

In the present embodiment, in a further step, the recorded training data RTD is then divided into 2 parts, e.g., a training set TRS and a test set TES. In the present embodiment, the training set TRS comprises 80% of the recorded training data RTD. Consequently, the test set TES comprises 20% of the recorded training data RTD.

Further, the training set TRS is converted in a first data-subset DS1 and a second data-subset DS2. In the present embodiment, the first data-subset contains most of the columns (In the present embodiment 166 columns), and the second data-subset contains 2 columns i.e., latitude and longitude, in the present embodiment.

The second artificial neural network 6 will be fed with the first data-subset and the second data-subset and during its training it will learn the relationship between the first data-subset and the second data-subset, so that whenever the trained second artificial neural network 6 encounters a first data-subset type of data it outputs corresponding second data-subset values which consist of location coordinates of the object 10.

In the present embodiment, the second artificial neural network 6 is again a Keras Deep Neural Network. Further, in the present embodiment, as activation function again "ReLu" or a sigmoid activation function was used. However, other activation functions can be used as well. Further, for the first artificial neural network 4 and the second artificial neural network 6 different activation functions can be used.

In the present embodiment, backpropagation was again used. However, despite the present embodiment, other algorithms could be used.

Similar, the second artificial neural network 6 could also comprise a long short-term memory (LSTM) in order to prevent back propagated errors from vanishing or exploding.

Again, after the training of the second artificial neural network 6 is done, the second trained artificial neural network 6 is saved in a h5-format in the present embodiment. Similar, the accuracy of the second trained artificial neural network 6 could be tested by the test-datasets. The first trained artificial neural network 4 can further convert into JSON-format in order to provide it to cloud computing 32 providing services like Amazon Web Services or Azure as an API.

Reference is made to Figure 7 in order to explain a method to determine the position of the object 10 shown in Figure 1.

In a first step S100, the GNSS-receiver 14 records training data in order to get recorded good training data GTD.

In a further step S200, the GNSS-receiver 14 records training data in order to get recorded bad training data BTD.

In a further step S300, the first artificial neural network 4 is trained with the recorded good training data GTD and with the recorded bad training data BTD in order to train the first artificial neural network 4 to get as output of the first artificial neural network 4 the first data set FDS of low quality data and the second data set SDS of high quality data.

Moreover, the recorded training data are assigned to the good training data GTD and bad training data BTD by the use of Cosine similarity.

In a further step S400, the GNSS-receiver 14 records training data in order to get recorded training data RTD.

In a further step S500, the second artificial neural network 6 is trained with the recorded training data RTD in order to train the second artificial neural network 6 to get as output of the second artificial neural network 6 the improved data set IDS.

In a further step S600, after the training of the first artificial neural network 4 and the second artificial neural network 6 is completed, the GNSS-receiver 14 provides a further GNSS raw data set RDS indicative for the actual position of the object 10.

The GNSS raw data set RDS is transferred wirelessly to the cloud computing 32 hosting the trained first artificial neural network 4 and the trained second artificial neural network 6, the GNSS raw data set RDS is fed to the first trained artificial neural network 4 in order to get as output of the first artificial neural network 4 a first data set FDS of low quality data and a second data set SDS of high quality data.

In a further step S700, the first data set FDS of low quality data is fed to the second trained artificial neural network 6 in order to get as output of the second artificial neural network 6 an improved data set IDS.

In a further step S800, the second data set SDS of high quality data and the improved data set IDS are combined in order to provide a corrected data set CDS indicative for the position of the object 10.

In a further step S900, the HD map HDM is provided based on the corrected data set CDS.

In a further step S1000, the HD map HDM is transferred wirelessly to the vehicle 30.

In a further step S 1100, the vehicle 30, which is in the present embodiment a self-driving car, uses the HD map HDM in order to change the planned route by implementing in the planned route a change from lane 18a to lane 18b and revers in order to pass the construction site 12. Alternatively, instead of the HD map HDM, the corrected data set CDS indicative for the position of the object 10 could be transferred wirelessly to the vehicle 30, and used in the same way.

In a further step S1200, the HD map HDM could be transferred for documentation purposes, e.g. after implementing the safeguard 22 the safety devices 20a, 20b, 20c, 20d, 20e, 20f, 20g, 20h are at their defined positions. Further, the HD map HDM could be used to check the safeguard 22 by machine.

Despite the present embodiment, the sequence of the steps can also be different. Further, several steps can also be executed simultaneously. Furthermore, individual steps can also be skipped or omitted in deviation from the present embodiment.

Thus, the use of two artificial neural network 4, 6 as configured and trained as described above provides an enhancement to a global navigation satellite system (GNSS) without such fixed ground-based reference stations.

### Reference signs

- 2: system
- 4: first artificial neural network
- 6: second artificial neural network
- 8: output unit
- 10: object
- 12: construction site
- 14: GNSS-receiver
- 16: road
- 18a: lane
- 18b: lane
- 20a: safety device
- 20b: safety device
- 20c: safety device
- 20d: safety device
- 20e: safety device
- 20f: safety device
- 20g: safety device
- 20h: safety device
- 22: safeguard
- 24: input layer
- 26: intermediate layer
- 28: output layer
- 30: vehicle
- 32: cloud-computing

- BV: Boolean variable
- CDS: corrected data set
- DS1: first data-subset
- DS: second data-subset
- FDS: first data set
- GTD: good training data
- HDM: HD map
- HQ: data sets of high quality
- IDS: improved data set
- LA: latitude
- LO: longitude
- LQ: data sets of low quality
- RDS: GNSS raw data set
- RTD: recorded training data
- SDS: second data set
- SD1: sub-dataset
- SD2: sub-dataset
- SD3: sub-dataset
- SD4: sub-dataset
- TES: training set
- TRS: test set

- S100: step
- S200: step
- S300: step
- S400: step
- S500: step
- S600: step
- S700: step
- S800: step
- S900: step
- S1000: step
- S1100: step
- S1200: step

## Claims

1. A method to determine a position of an object (10) based on a GNSS raw data set (RDS), comprising at least the steps of:
(S600) feeding the GNSS raw data set (RDS) to a first trained artificial neural network (4) in order to get as output of the first artificial neural network (4) a first data set (FDS) of low quality data and a second data set (SDS) of high quality data,
(S700) feeding the first data set (FDS) of low quality data to a second trained artificial neural network (6) in order to get as output of the second artificial neural network (6) an improved data set (IDS),
(S800) combining the second data set (SDS) of high quality data and the improved data set (IDS) in order to provide a corrected data set (CDS) indicative for the position of the object (10).

2. The method of claim 1, wherein the training of the first artificial neural network (4) comprises the following steps:
(S100) recording training data with the GNSS-receiver (14) in order to get recorded good training data (GTD),
(S200) recording training data with the GNSS-receiver (14) in order to get recorded bad training data (BTD),
(S300) training of the first artificial neural network (4) with the recorded good training data (GTD) and with the recorded bad training data (BTD) in order to train the first artificial neural network (4) to get as output of the first artificial neural network (4) the first data set (FDS) of low quality data and the second data set (SDS) of high quality data.

3. The method of claim 2, wherein the recorded training data are assigned to the good training data (GTD) and bad training data (BTD) by the use of Cosine similarity.

4. The method of any of the preceding claims, wherein the training of the second artificial neural network (6) comprises the following steps:
(S400) recording training data with the GNSS-receiver (14) in order to get recorded training data (RTD),
(S500) training of the second artificial neural network (6) with the recorded training data (RTD) in order to train the second artificial neural network (6) to get as output of the second artificial neural network (6) the improved data set (IDS).

5. A computer program product, configured to carry out the method of anyone of claims 1 to 4.

6. A system (2) to determine a position of an object (10) based on a GNSS raw data set (RDS), with
a first trained artificial neural network (4) trained to provide on the basis of the GNSS raw data set (RDS) as output a first data set (FDS) of low quality data and a second data set (SDS) of high quality data,
a second trained artificial neural network (6) trained to provide on the basis of the first data set (FDS) of low quality data as output an improved data set (IDS),
an output unit (8) configured to combine the second data set (SDS) of high quality data and the improved data set (IDS) to provide a corrected data set (CDS) indicative for the position of the object (10).

7. The system (2) of claim 6, wherein the first artificial neural network (4) was trained with recorded good training data (GTD) received with the GNSS-receiver (14), and the first artificial neural network (4) was trained with recorded bad training data (BTD) received with the GNSS-receiver (14), in order to train the first artificial neural network (4) to get as output of the first artificial neural network (4) the first data set (FDS) of low quality data and the second data set (SDS) of high quality data.

8. The system (2) of claim 7, wherein the system (2) is configured to assign the training data to the good training data (GTD) and to the bad training data (BTD) by the use of Cosine similarity.

9. The system (2) of any of the preceding claims, wherein the second artificial neural network (6) was trained with recorded training data (RTD) recorded with the GNSS-receiver (14) to provide as output the improved data set (IDS).

10. A construction site (12) with a system (2) of anyone of claims 6 to 9.
